# FASCICULE DE BREVET EUROPEEN

(11) **EP 2 956 692 B1**
(45) Date de publication et mention de la délivrance du brevet: **01.02.2017**
(21) Numéro de dépôt: 14702842.7
(22) Date de dépôt: 04.02.2014
(51) Int. Cl.: F16H 61/4096, F16H 61/4139, B60K 17/356, F16H 61/4148, B60K 23/08

(54) **SYSTÈME AMÉLIORÉ DE MISE EN SERVICE D'APPAREILS HYDRAULIQUE D'UN CIRCUIT D'ASSISTANCE**
VERBESSERTES SYSTEM ZUR IMPLEMENTIERUNG VON HYDRAULISCHEN VORRICHTUNGEN EINER HILFSSCHALTUNG
IMPROVED SYSTEM FOR THE IMPLEMENTATION OF HYDRAULIC DEVICES OF AN ASSISTANCE CIRCUIT

(30) Priorité: 13.02.2013 FR 1351245
(43) Date de publication de la demande: 23.12.2015
(73) Titulaire: Poclain Hydraulics Industrie, 60410 Verberie (FR)
(72) Inventeur: BERTAUX, Alexandra, F-60410 Verberie (FR); LAMBEY, Julien, F-60410 Verberie (FR); PRIGENT,André, F-60410 Verberie (FR)
(74) Mandataire: Regimbeau
(86) Numéro de dépôt international: PCT/EP2014/052149
(87) Numéro de publication internationale: WO 2014/124840

(56) Documents cités:
- EP-A1- 0 993 982
- FR-A1- 2 956 461
- US-A1- 2004 118 623
- US-A1- 2011 302 914

## Description

### DOMAINE TECHNIQUE GENERAL

La présente invention concerne le domaine des circuits hydrauliques d'assistance utilisés notamment pour des véhicules.

### ETAT DE L'ART

On connait les systèmes d'assistance hydraulique pour véhicules, pouvant être engagés sélectivement en fonction des conditions d'utilisation du véhicule ou sur commande de l'utilisateur.
De tels systèmes viennent ainsi complémenter une transmission principale du véhicule, communément mécanique, électrique ou encore hydrostatique à grande vitesse.

Dans l'ensemble du présent texte, on désignera par appareil hydraulique un appareil pouvant fonctionner en tant que moteur ou que pompe hydraulique. Un appareil hydraulique comprend de manière conventionnelle une pluralité de pistons disposés dans des logements, et effectuant des mouvements de va et vient au contact d'une came multilobes dans le cas d'un appareil hydraulique à pistons radiaux.

Une structure particulière d'un système d'assistance est présentée dans la demande de brevet FR 1259191 non encore publiée au nom de la demanderesse.
Cette structure consiste à monter un premier appareil hydraulique que l'on qualifie de menant sur un arbre du véhicule entrainé en rotation par la transmission principale du véhicule, et un ou plusieurs appareils hydrauliques que l'on qualifie de menés, sur un ou des autres arbres du véhicule, non entrainé par la transmission principale, les appareils hydrauliques menant et menés étant reliés par un circuit hydraulique. En fonctionnement sans assistance, les deux appareils hydrauliques sont en configuration de roue libre ; il s'agit ainsi typiquement d'appareils hydrauliques à pistons radiaux, les pistons étant rétractables dans leurs logements respectifs.

Plus précisément, pour les appareils hydrauliques à pistons rétractables, on définit une configuration de roue libre, c'est-à-dire une configuration dans laquelle l'appareil hydraulique fonctionne sans pression de fluide et plus particulièrement où les pistons ne sont pas en contact avec la came associée, une telle configuration étant par exemple avantageuse sur des engins ayant des conditions de travail mixtes.
A cette configuration de roue libre s'oppose la configuration de service, dans laquelle les pistons sont au contact de la came associée, et l'appareil hydraulique fonctionne avec une pression de fluide.
Le passage de la configuration de roue libre à la configuration de service est appelé la mise en service de l'appareil hydraulique.
Afin d'assurer un retour à la configuration de roue libre en l'absence d'application de pression, les pistons d'un appareil hydraulique rétractable sont par exemple munis de ressorts de traction, tendant à ramener les pistons dans leurs logements respectifs, et donc à les éloigner de la came.

Lors de l'engagement de l'assistance hydraulique, les différents appareils hydrauliques doivent être mis en service. Cependant, cette mise en service entraine des chocs lors de la mise au contact des pistons contre la came, ce qui nuit à la durée de vie des appareils hydrauliques, et provoque un bruit important ce qui est gênant pour l'utilisateur.

### PRESENTATION DE L'INVENTION

La présente invention vise à proposer un système ne présentant pas cette problématique.

A cet effet, la présente invention propose un système comprenant :
- un appareil hydraulique menant à pistons radiaux rétractables, présentant un orifice d'admission et un orifice de refoulement,
- un appareil hydraulique mené à pistons radiaux rétractables, présentant un orifice d'admission et un orifice de refoulement,
   le refoulement de l'appareil hydraulique menant étant relié à l'admission de l'appareil hydraulique mené par une ligne d'alimentation, et le refoulement de l'appareil hydraulique mené étant relié à l'admission de l'appareil hydraulique menant par une ligne de retour,
- un moteur primaire,
   caractérisé en ce que ledit système comprend en outre une source de gavage délivrant un débit, adaptée pour être engagée sélectivement, ladite source de gavage étant reliée
- à la ligne d'admission et à la ligne de refoulement via une ligne de gavage, et
- sélectivement soit à un réservoir, soit uniquement à l'admission de l'appareil hydraulique menant via une ligne d'engagement munie d'une commande.

Selon un mode de réalisation particulier, la source de gavage comprend une pompe de gavage liée au moteur primaire par un embrayage permettant leur couplage sélectif, et un accumulateur hydraulique adapté pour être chargé par la pompe de gavage et délivrer une pression.

Selon un autre mode de réalisation particulier, la source de gavage comprend le moteur primaire et une pompe de gavage, le moteur primaire et la pompe de gavage formant un groupe électropompe.

Selon un mode de réalisation particulier, la commande est configurée de manière à réaliser une mise en service de l'appareil hydraulique menant via l'application d'un débit par la source de gavage préalablement à la mise en service de l'appareil hydraulique mené, l'appareil hydraulique menant présentant un fonctionnement de pompe pour un sens de fonctionnement du système.

Selon un mode de réalisation particulier, la commande comprend :
- un distributeur d'engagement adapté pour, dans une première configuration relier l'admission de l'appareil hydraulique menant à la source de gavage et le refoulement de l'appareil hydraulique mené à un réservoir à pression ambiante, et dans une seconde configuration relier l'admission de l'appareil hydraulique menant au refoulement de l'appareil hydraulique mené.

Selon un mode de réalisation particulier, la ligne de gavage est munie d'un distributeur de gavage adapté pour dans une première configuration relier la ligne d'admission et la ligne de retour à un réservoir à pression ambiante chacune via un clapet anti retour et un limiteur de pression, et dans une seconde configuration relier la source de gavage à la ligne d'admission et à la ligne de retour chacune via un clapet anti retour et un limiteur de pression.

L'invention concerne également un véhicule comprenant un système tel que défini précédemment, ledit véhicule comprenant une transmission principale réalisant l'entrainement d'un essieu menant auquel est couplé l'appareil hydraulique menant, et un essieu mené non entrainé par la transmission principale et auquel est couplé l'appareil hydraulique mené, dans lequel la commande est configurée de manière à permettre de réaliser la mise en service de l'appareil hydraulique menant préalablement à la mise en service de l'appareil hydraulique mené.

L'invention concerne en outre un procédé de commande d'un système hydraulique comprenant un appareil hydraulique menant à pistons radiaux rétractables et un appareil hydraulique mené à pistons radiaux rétractables, dans lequel on réalise la mise en service desdits appareils hydrauliques par les étapes suivantes :
- on couple une source de gavage à un moteur primaire, de sorte que la source de gavage délivre une pression,
- on relie la source de gavage de sorte qu'elle alimente l'admission de l'appareil hydraulique menant via une ligne d'engagement, le refoulement de l'appareil hydraulique mené étant alors relié à un réservoir à pression ambiante,
- on exécute une temporisation, durant laquelle la source de gavage réalise la mise en service de l'appareil hydraulique menant en provoquant la sortie progressive de ses pistons de leurs logements respectifs et leur mise au contact d'une came, l'appareil hydraulique menant refoulant de l'huile par son refoulement qui alimente l'appareil hydraulique mené par son admission via une ligne d'admission et réalise ainsi sa mise en service pendant que le refoulement de l'appareil mené est relié au réservoir à pression ambiante,
- on relie le refoulement de l'appareil hydraulique mené à l'admission de l'appareil hydraulique menant par une ligne de retour de manière à former un circuit fermé entre les deux appareils hydrauliques.

Selon un mode de réalisation particulier, ledit procédé comprend en outre une étape durant laquelle on relie la source de gavage à la ligne d'admission et à la ligne de retour via une ligne de gavage comprenant un distributeur de gavage de manière à réaliser un gavage du circuit hydraulique fermé ainsi formé.

Selon un mode de réalisation particulier, ledit procédé comprend en outre une étape de désengagement des appareils hydrauliques dans laquelle :
- on désengage la source de gavage,
- on pilote le distributeur de gavage de manière à relier la ligne d'admission et la ligne de retour au réservoir à pression ambiante, typiquement via un clapet anti retour et un limiteur de pression, et
- on relie le refoulement de l'appareil hydraulique mené au réservoir à pression ambiante de manière à vider le fluide du circuit fermé dans le réservoir à pression ambiante et ainsi mettre les appareils hydrauliques menant et mené en configuration de roue libre.

Selon un mode de réalisation particulier, ledit procédé comprend en outre une étape de charge d'un accumulateur par une pompe de gavage de la source de gavage préalablement à l'alimentation de l'appareil hydraulique menant, ledit accumulateur se déchargeant pour alimenter l'admission de l'appareil hydraulique menant et réaliser sa mise en service.

### PRESENTATION DES FIGURES

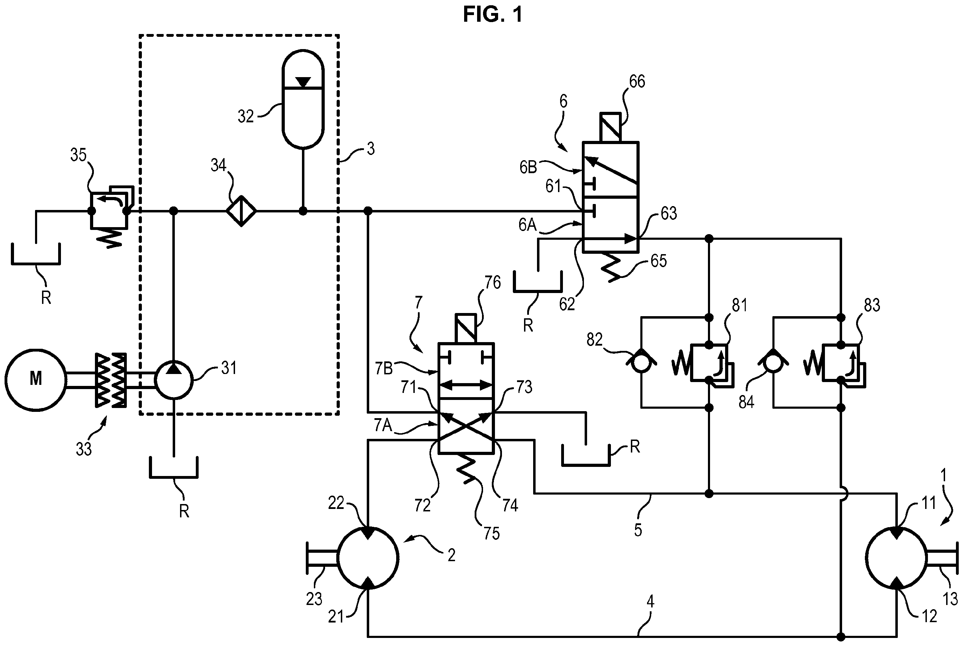

D'autres caractéristiques, buts et avantages de l'invention ressortiront de la description qui suit, qui est purement illustrative et non limitative, et qui doit être lue en regard des dessins annexés, sur lesquels les figures 1 à 4 présentent un système selon un aspect de l'invention selon plusieurs configurations illustrant son fonctionnement.

Sur l'ensemble des figures, les éléments en commun sont repérés par des références numériques identiques.

### DESCRIPTION DETAILLEE

Les figures 1 à 4 présentent un système selon un aspect de l'invention selon plusieurs configurations illustrant son fonctionnement.

Le système présenté comprend un appareil hydraulique menant 1 à pistons radiaux rétractables et un appareil hydraulique mené 2 à pistons radiaux rétractables.
Afin d'illustrer le fonctionnement du système, on repère pour chacun de ces appareils hydrauliques son admission et son refoulement, respectivement l'admission 11 et le refoulement 12 de l'appareil hydraulique menant 1, et l'admission 21 et le refoulement 22 de l'appareil hydraulique mené 2.
Le refoulement 12 de l'appareil hydraulique menant 1 est relié à l'admission 21 de l'appareil hydraulique mené 2 par une ligne d'alimentation 4, et le refoulement 22 de l'appareil hydraulique mené 2 étant relié à l'admission 11 de l'appareil hydraulique menant 1 par une ligne de retour 5.

Les appareils hydrauliques 1 et 2 sont chacun associé à un arbre tournant, respectivement 13 et 23, typiquement un essieu de véhicule.

Un moteur primaire M est typiquement un moteur thermique ou électrique.

Ce moteur primaire M est couplé à une source de gavage 3 via un embrayage 33, permettant l'engagement ou le désengagement de cette source de gavage 3 avec le moteur primaire M.
Ce moteur primaire M est par exemple relié à une transmission principale du véhicule permettant l'entrainement de ses roues, les différentes structures de transmission principale et de roues étant bien connues de l'homme du métier et n'étant pas représentées sur les figures.
Selon une autre variante, le moteur primaire M est un moteur indépendant par rapport à la transmission principale du véhicule ou de l'engin considéré. Le moteur primaire M et la source de gavage 3 peuvent alors par exemple former un groupe électropompe dans lequel l'embrayage 33 peut être supprimé.

Dans le mode de réalisation représenté, la source de gavage 3 comprend une pompe de gavage 31, un accumulateur hydraulique 32, et un filtre 34.

La source de gavage 3 est reliée à la ligne de retour 5 par une ligne d'engagement comprenant un distributeur d'engagement 7, comprenant quatre orifices et alternant entre deux configurations que l'on décrit ci-après.

Le distributeur d'engagement 7 comprend ainsi :
- un premier orifice 71 relié à la source de gavage 3 ;
- un deuxième orifice 72 relié au refoulement 22 de l'appareil hydraulique mené 2 ;
- un troisième orifice 73 relié au réservoir R;
- un quatrième orifice 74 relié à l'admission 11 de l'appareil hydraulique menant 1.
Le distributeur d'engagement 7 est piloté par un actionneur 76, typiquement un actionneur électrique, s'opposant à un moyen de rappel élastique 75 tel qu'un ressort, permettant d'alterner entre :
- une première configuration 7A, dans laquelle le premier orifice 71 est relié au quatrième orifice 74, et le deuxième orifice 72 est relié au troisième orifice 73, et
- une seconde configuration 7B dans laquelle le deuxième orifice 72 est relié au quatrième orifice 74, tandis que les premier et troisième orifices 71 et 73 sont obturés.

En l'absence d'effort appliqué par l'actionneur 76, le moyen de rappel élastique 75 maintient par défaut le distributeur d'engagement 7 dans sa première configuration 7A.

La source de gavage 3 est également reliée à la ligne de retour 5 et à la ligne d'alimentation 4 via une ligne de gavage comprenant un distributeur de gavage 6 optionnel, comprenant trois orifices et alternant entre deux configurations que l'on décrit ci-après.

Le distributeur de gavage 6 comprend ainsi :
- un premier orifice 61 relié à la source de gavage 3 ;
- un deuxième orifice 62 relié au réservoir R;
- un troisième orifice 63 relié à la ligne de retour 5 par un limiteur de pression 81 et un clapet anti retour 82 montés en parallèle, et à la ligne d'alimentation 4 par un limiteur de pression 83 et un clapet anti retour 84 montés en parallèle.
Le distributeur de gavage 6 est piloté par un actionneur 66, typiquement un actionneur électrique, s'opposant à un moyen de rappel élastique 65 tel qu'un ressort, permettant d'alterner entre :
- une première configuration 6A, dans laquelle le premier orifice 61 est obturé tandis que le deuxième orifice 62 est relié au troisième orifice 63, et
- une seconde configuration 6B dans laquelle le deuxième orifice 62 est obturé, tandis que le premier orifice 61 est relié au troisième orifice 63.

En l'absence d'effort appliqué par l'actionneur 66, le moyen de rappel élastique 65 maintient par défaut le distributeur de gavage 6 dans sa première configuration 6A.

La source de gavage 3 prélève de l'huile dans un réservoir R, typiquement à pression ambiante, et est reliée à ce même réservoir R via un limiteur de pression 35 de manière à évacuer un excès de pression de la ligne de gavage reliant la source de gavage 3 aux distributeurs d'engagement 7 et de gavage 6 vers le réservoir R.

On décrit ensuite le fonctionnement du système présenté.

La figure 1 présente le système dans une configuration de repos, les distributeurs de gavage 6 et d'engagement 7 sont chacun dans leur première configuration respectivement 6A et 7A, les deux appareils hydrauliques 1 et 2 sont en configuration de roue libre et reliés chacun au réservoir R, et l'embrayage 33 est désengagé ; la pompe de gavage 31 n'est pas actionnée.
Le moteur primaire M est inactif, correspondant par exemple à un véhicule à l'arrêt, ou actif, correspondant par exemple à un véhicule entrainé uniquement par ce moteur primaire M dans le cas où le moteur primaire M réalise la transmission principale du véhicule, ou encore à une configuration dans laquelle l'assistance hydraulique n'est pas sollicitée.

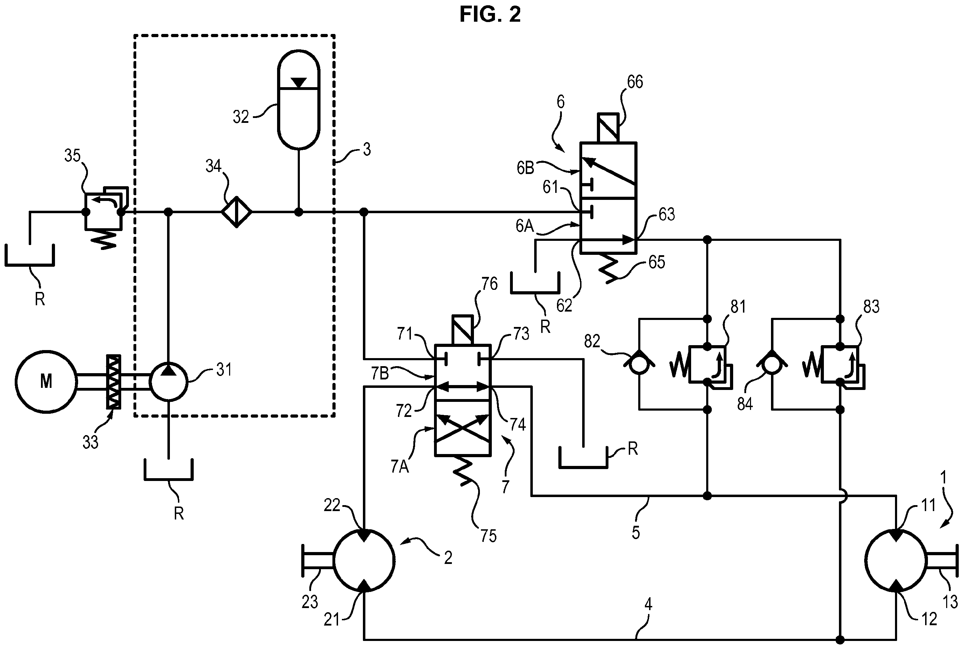

La figure 2 présente le système dans une configuration de charge de l'accumulateur 32.
La pompe de gavage 31 est couplée au moteur primaire M par l'embrayage 33, et l'actionneur 76 du distributeur d'engagement 7 est activé de manière à le basculer dans sa seconde configuration 7B.
La pompe de gavage 31 charge l'accumulateur 32 jusqu'à une valeur de pression donnée définie par le limiteur de pression 35, typiquement égale à 25 bar, au-delà de laquelle l'excédent de fluide est évacué vers le réservoir R via le limiteur de pression 35.
Les deux appareils hydrauliques 1 et 2 sont toujours en configuration de roue libre.

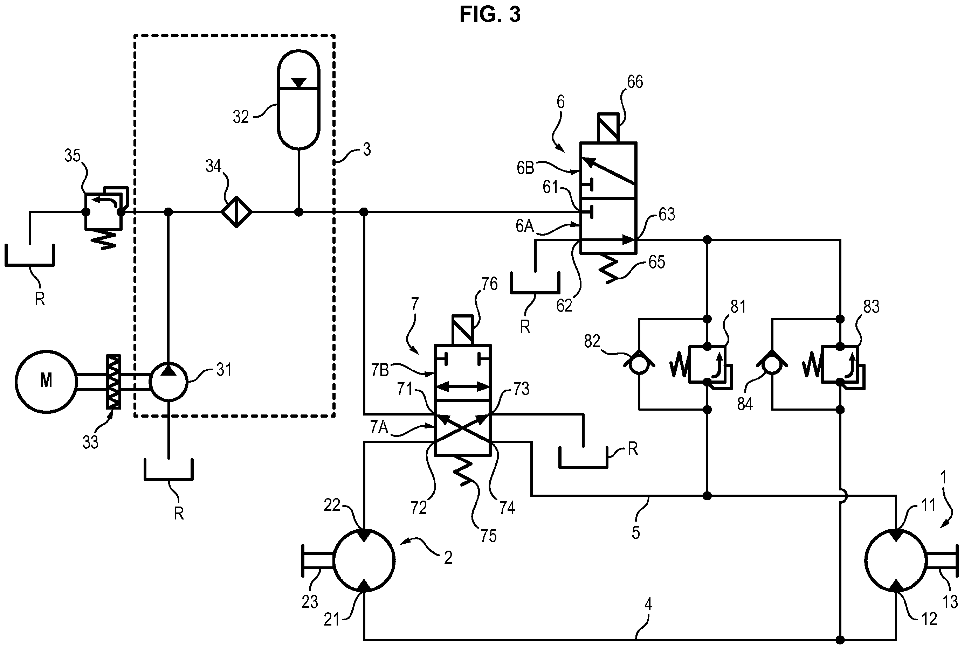

La figure 3 présente le système dans une configuration d'engagement des appareils hydrauliques 1 et 2.

La pompe de gavage 31 est couplée au moteur primaire M par l'embrayage 33, et l'actionneur 76 du distributeur d'engagement 7 est désactivé de manière à ce que le distributeur 76 bascule dans sa première configuration 7A sous l'effet du moyen de rappel 75.
La source de gavage 3, c'est-à-dire la pompe de gavage 31 et l'accumulateur 32 délivrent alors un débit à l'admission 11 de l'appareil hydraulique menant 1
Les pistons de l'appareil hydraulique menant 1 sont alors sortis progressivement de leurs logements respectifs et amenés au contact de la came, réalisant la mise en service de l'appareil hydraulique menant 1. L'arbre 13 applique un couple d'entrée à l'appareil hydraulique menant 1 ; ce dernier étant passé en configuration de service, il délivre alors un débit par l'admission 21 de l'appareil hydraulique mené 2, ce qui provoque sa mise en service par sortie progressive de ses pistons de leurs logements respectifs et leur mise au contact de la came.
L'huile est ensuite évacuée par le refoulement 22 de l'appareil hydraulique mené 2 vers le réservoir R.

On remarque en premier lieu que la mise en service des appareils hydrauliques est progressive ; l'appareil hydraulique menant 1 est mis en service dans un premier temps, puis l'appareil hydraulique mené 2 est mis en service dans un second temps.

Par ailleurs, la mise en service des appareils hydrauliques 1 et 2 est réalisée en les alimentant par leurs admissions, respectivement 11 et 21.
De cette manière, l'instant où les pistons sont sortis de leurs logements correspond à une phase de sortie des pistons lors du fonctionnement de l'appareil hydraulique, c'est-à-dire que les pistons effectuent un mouvement de sortie de leurs logements afin de suivre la géométrie de la came, par opposition à la phase de retour lors de laquelle les pistons effectuent un mouvement de retrait dans leurs logements afin de suivre la géométrie de la came.

En réalisant la mise en service par sortie des pistons uniquement en phase de sortie, l'usure des pistons et de la came est réduite, et la mise en service est plus silencieuse.
De plus, une fois les premiers pistons alimentés sortis de leurs logements respectifs, la partie mobile de l'appareil hydraulique tourne, alimentant ainsi d'autres pistons par des orifices d'alimentation du distributeur, et entraînant leur sortie de leurs logements et leur mise au contact de la came. Ces pistons sont alors sortis de leurs logements dès le début de la phase de sortie, lorsque l'orifice d'alimentation correspondant du distributeur s'ouvre, ce qui correspond à un sommet et un plat de la came, et un point le plus proche du piston, ce qui est le plus avantageux pour la mise au contact du piston sur la came en limitant les chocs.

L'accumulateur 32 est avantageusement dimensionné de manière à permettre de réaliser la mise en service rapide des appareils hydrauliques 1 et 2 à lui seul, permettant ainsi de minimiser la pompe de gavage 31.

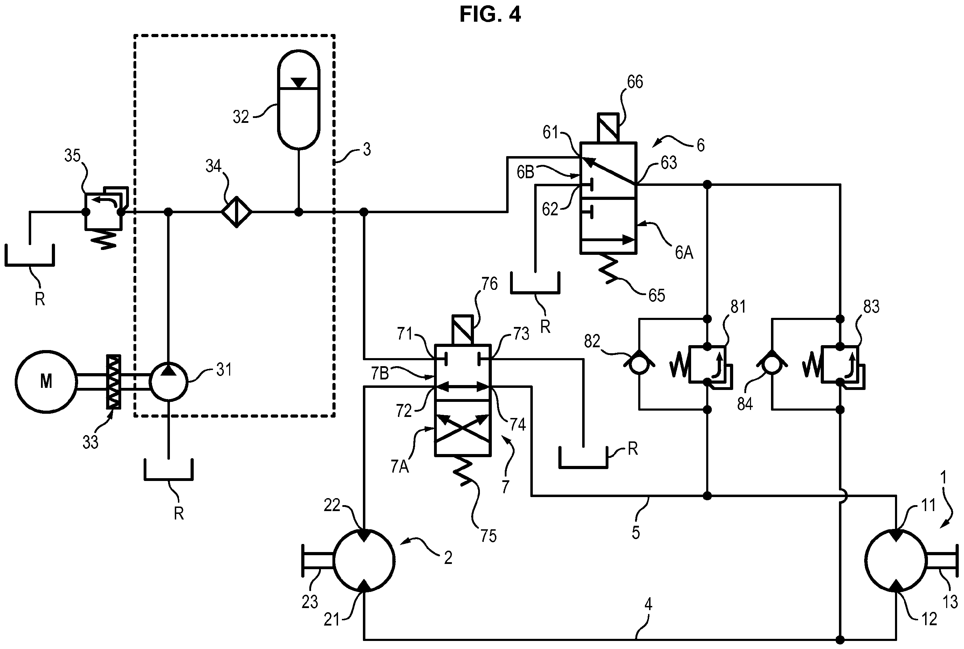

Une fois la mise en cylindrée des appareils hydrauliques menant 1 et mené 2 réalisée, le système bascule dans la configuration de traction représentée sur la figure 4.
L'actionneur 76 du distributeur d'engagement 7 est activé, de manière à basculer le distributeur d'engagement 7 dans sa seconde configuration 7B.
L'actionneur 66 du distributeur de gavage 6 est activé, de manière à basculer le distributeur de gavage 6 dans sa seconde configuration 6B.

Dans une variante du système présenté ne comprenant le distributeur de gavage 6, la ligne de gavage relie en permanence la source de gavage 3 à la ligne de retour 5 et à la ligne d'alimentation 4 via les clapets anti retour et limiteurs de pression 81, 82, 83 et 84.

En l'absence de pression appliquée via le distributeur d'engagement 7, la ligne de retour 5 et la ligne d'alimentation 4 sont alors maintenues à pression sensiblement constante et identique du fait de ce gavage.
Le fonctionnement est alors similaire à celui décrit précédemment, l'engagement de la source de gavage 3 et le pilotage du distributeur d'engagement 7 permet de réaliser une mise en service progressive et successive des appareils hydrauliques menant 1 et mené 2 à partir d'une configuration de roue libre.
Une quantité sensiblement plus importante d'huile est envoyée vers le réservoir R lors de la mise en service du système, mais ce dernier présente un encombrement et un coût réduit du fait de la suppression du distributeur de gavage 6.

Le passage de la configuration représentée sur la figure 3 et la configuration de traction représentée sur la figure 4 peut être conditionné à l'exécution d'une temporisation, ou à des capteurs de pression disposés dans le système, par exemple lorsque la pression au sein de l'accumulateur 32 descend au-delà d'une valeur seuil, ou lorsque la pression au niveau du refoulement 22 de l'appareil hydraulique mené 2 dépasse une valeur seuil.

Les appareils hydrauliques menant 1 et mené 2 forment ainsi un circuit hydraulique fermé, dont la source de gavage 3 assure un gavage en pression via les clapets anti retour et limiteurs de pression 81, 82, 83 et 84 afin de compenser les pertes et fuites dans le circuit.

Cette configuration représente par exemple un mode de fonctionnement de l'assistance hydraulique sur un véhicule.
L'appareil hydraulique menant 1 a typiquement un fonctionnement de pompe ; un couple d'entrée lui est appliqué par l'arbre 13 correspondant par exemple à un essieu de véhicule entrainé en rotation par le moteur primaire M, de manière à ce que l'appareil hydraulique menant 1 délivre un débit.

L'appareil hydraulique mené 2 a alors un fonctionnement de moteur ; il est alimenté par l'appareil hydraulique menant 1, et entraine en rotation l'arbre 23.

On considère un exemple d'application à un véhicule pour lequel l'arbre 13 correspond à un essieu menant du véhicule entrainé par la transmission principale du véhicule, et l'arbre 23 est un essieu mené non entrainé par la transmission principale du véhicule.
L'appareil hydraulique menant 1 présente alors un fonctionnement de pompe ; il prélève un couple sur l'essieu menant pour le transmettre à l'essieu mené via le circuit hydraulique, l'appareil hydraulique mené 2 fonctionnant en moteur et entrainant ainsi cet essieu pour réaliser une assistance hydraulique.
le système présenté permet de réaliser une assistance hydraulique sur l'arbre 23 correspondant typiquement à un essieu non entrainé en rotation par le moteur primaire M, en prélevant un couple sur l'arbre 13 via l'appareil hydraulique menant 1 de manière à alimenter l'appareil hydraulique mené 2 qui entraine l'arbre 23.
Le système et le procédé présentés permettent de réaliser une mise en service de l'appareil hydraulique menant 1 avant de réaliser la mise en service de l'appareil hydraulique mené 2. Ceci permet de s'assurer de la mise en service de l'assistance hydraulique notamment lors d'une situation de patinage ; en effet, dans le cas inverse l'appareil hydraulique mené 2 ne tournerait pas à cause du patinage, ce qui empêcherait la mise en service des appareils hydrauliques 1 et 2, et donc plus généralement de l'assistance hydraulique.

Afin de désengager les appareils hydrauliques 1 et 2 et les ramener en configuration de roue libre, le distributeur d'engagement 7 est basculé dans sa première configuration 7A, le distributeur de gavage 6 est le cas échéant également basculé dans sa première configuration 6A, et l'embrayage 33 liant le moteur primaire M à la source de gavage 3 est désengagé.

Le système revient ainsi à la configuration présentée sur la figure 1.

L'accumulateur 32 se décharge progressivement en alimentant l'appareil hydraulique menant 1, puis l'huile refoulée par l'appareil hydraulique mené 2 étant vidée dans le réservoir R conduisant ainsi à une chute de pression progressive au fur et à mesure que l'accumulateur 32 se décharge.

Une fois que l'accumulateur 32 est déchargé, les appareils hydrauliques 1 puis 2 retournent en configuration de roue libre ; leurs pistons se rétractent dans leurs logements typiquement sous l'action de ressorts de rappel, ou sous l'effet des lobes de la came qui les font rentrer dans leurs logements respectifs, puis en l'absence de pression, ils n'en ressortent pas.

Le système peut être à nouveau mis en service comme décrit précédemment, en le faisant passer successivement dans les configurations présentées sur les figures 1, 2, 3 puis 4.

L'invention permet ainsi de réaliser une sortie progressive des pistons pour réaliser la mise en service d'appareils hydrauliques d'une assistance hydraulique.

La description est faite en référence au système présenté sur les figures 1 à 4 comprenant un unique appareil hydraulique menant 1 et un unique appareil hydraulique mené 2. On comprend bien que l'invention s'applique également à d'autres systèmes présentant plusieurs appareils hydrauliques menant et/ou menés, la source de gavage 3 étant alors dimensionnée de manière à permettre la mise en service et le gavage de l'ensemble des appareils hydrauliques concernés.

De plus, les pistons sont mis progressivement au contact de la came par une alimentation des appareils hydrauliques via leur admission, correspondant ainsi à la phase de sortie des pistons, ce qui réduit l'usure des différents composants par rapport à une sortie des pistons en phase de retour ainsi que le bruit résultant de la mise en service.

Par ailleurs, en réalisant ainsi une mise en service progressive des différents appareils hydrauliques d'un circuit uniquement par leur admission, la quantité d'huile instantanée requise est moindre, typiquement réduite d'un rapport quatre par rapport à un système conventionnel.
Ainsi, on peut avoir un accumulateur réduit ou une pompe de gavage ayant un débit plus faible par rapport à un circuit sans l'invention, comprenant les mêmes appareils hydrauliques.

Enfin, en utilisant une source de gavage 3 comprenant une pompe de gavage 31 et un accumulateur 32, on peut avantageusement dimensionner l'accumulateur 32 de manière à minimiser la pompe de gavage 31.

## Revendications

1. Système comprenant :
- un appareil hydraulique menant (1) à pistons radiaux rétractables, présentant un orifice d'admission (11) et un orifice de refoulement (12),
- un appareil hydraulique mené (2) à pistons radiaux rétractables, présentant un orifice d'admission (21) et un orifice de refoulement (22), le refoulement (12) de l'appareil hydraulique menant (1) étant relié à l'admission (21) de l'appareil hydraulique mené (2) par une ligne d'alimentation (4), et le refoulement (22) de l'appareil hydraulique mené (2) étant relié à l'admission (11) de l'appareil hydraulique menant (1) par une ligne de retour (5),
- un moteur primaire (M),
**caractérisé en ce que** ledit système comprend en outre une source de gavage (3) délivrant un débit, adaptée pour être engagée sélectivement, ladite source de gavage étant reliée
- à la ligne d'admission (4) et à la ligne de refoulement (5) via une ligne de gavage, et
- sélectivement soit à un réservoir (R), soit uniquement à l'admission (11) de l'appareil hydraulique menant (1) via une ligne d'engagement munie d'une commande (7).

2. Système selon la revendication 1, dans lequel la source de gavage (3) comprend une pompe de gavage (31) liée au moteur primaire (M) par un embrayage (33) permettant leur couplage sélectif, et un accumulateur (32) hydraulique adapté pour être chargé par la pompe de gavage (31) et délivrer une pression.

3. Système selon la revendication 1, dans lequel la source de gavage (3) comprend le moteur primaire (M) et une pompe de gavage (31), le moteur primaire (M) et la pompe de gavage (31) formant un groupe électropompe.

4. Système selon l'une des revendications 1 à 3, dans lequel la commande (7) est configurée de manière à réaliser une mise en service de l'appareil hydraulique menant (1) via l'application d'un débit par la source de gavage (3) préalablement à la mise en service de l'appareil hydraulique mené (2), l'appareil hydraulique menant (1) présentant un fonctionnement de pompe pour un sens de fonctionnement du système.

5. Système selon l'une des revendications 1 à 4, dans lequel la commande (7) comprend :
- un distributeur d'engagement (7) adapté pour, dans une première configuration (7A) relier l'admission (11) de l'appareil hydraulique menant (1) à la source de gavage (3) et le refoulement (22) de l'appareil hydraulique mené (2) à un réservoir à pression ambiante (R), et dans une seconde configuration (7B) relier l'admission (11) de l'appareil hydraulique menant (1) au refoulement (22) de l'appareil hydraulique mené (2).

6. Système selon l'une des revendications 1 à 5, dans lequel la ligne de gavage est munie d'un distributeur de gavage (6) adapté pour dans une première configuration (6A) relier la ligne d'admission (4) et la ligne de retour (5) à un réservoir (R) à pression ambiante chacune via un clapet anti retour (82, 84) et un limiteur de pression (81, 83), et dans une seconde configuration (6B) relier la source de gavage (3) à la ligne d'admission (4) et à la ligne de retour (5) chacune via un clapet anti retour (82, 84) et un limiteur de pression (81, 83).

7. Véhicule comprenant un système selon l'une des revendications 1 à 6, ledit véhicule comprenant une transmission principale réalisant l'entrainement d'un essieu menant (13) auquel est couplé l'appareil hydraulique menant (1), et un essieu mené (23) non entrainé par la transmission principale et auquel est couplé l'appareil hydraulique mené (2), dans lequel la commande (7) est configurée de manière à permettre de réaliser la mise en service de l'appareil hydraulique menant (1) préalablement à la mise en service de l'appareil hydraulique mené (2).

8. Procédé de commande d'un système hydraulique comprenant un appareil hydraulique menant (1) à pistons radiaux rétractables et un appareil hydraulique mené (2) à pistons radiaux rétractables, dans lequel on réalise la mise en service desdits appareils hydrauliques (1, 2) par les étapes suivantes :
- on couple une source de gavage (3) à un moteur primaire (M), de sorte que la source de gavage (3) délivre une pression,
- on relie la source de gavage (3) de sorte qu'elle alimente l'admission (11) de l'appareil hydraulique menant (1) via une ligne d'engagement, le refoulement (22) de l'appareil hydraulique mené (2) étant alors relié à un réservoir à pression ambiante (R),
- on exécute une temporisation, durant laquelle la source de gavage (3) réalise la mise en service de l'appareil hydraulique menant (1) en provoquant la sortie progressive de ses pistons de leurs logements respectifs et leur mise au contact d'une came, l'appareil hydraulique menant (1) refoulant de l'huile par son refoulement (12) qui alimente l'appareil hydraulique mené (2) par son admission (21) via une ligne d'admission (4) et réalise ainsi sa mise en service pendant que le refoulement (22) de l'appareil mené (2) est relié au réservoir à pression ambiante (R),
- on relie le refoulement (22) de l'appareil hydraulique mené (2) à l'admission (11) de l'appareil hydraulique menant (1) par une ligne de retour (5) de manière à former un circuit fermé entre les deux appareils hydrauliques (1, 2).

9. Procédé selon la revendication 8, comprenant en outre une étape durant laquelle on relie la source de gavage (3) à la ligne (4) d'admission et à la ligne de retour (5) via une ligne de gavage comprenant un distributeur de gavage (6) de manière à réaliser un gavage du circuit hydraulique fermé ainsi formé.

10. Procédé selon la revendication 9, comprenant en outre une étape de désengagement des appareils hydrauliques (1, 2) dans laquelle :
- on désengage la source de gavage (3),
- on pilote le distributeur de gavage (6) de manière à relier la ligne d'admission (4) et la ligne de retour (5) au réservoir (R) à pression ambiante, typiquement via un clapet anti retour et un limiteur de pression, et
- on relie le refoulement (22) de l'appareil hydraulique mené (2) au réservoir (R) à pression ambiante de manière à vider le fluide du circuit fermé dans le réservoir (R) à pression ambiante et ainsi mettre les appareils hydrauliques menant (1) et mené (2) en configuration de roue libre.

11. Procédé selon l'une des revendications 8 à 10, comprenant en outre une étape de charge d'un accumulateur (32) par une pompe de gavage (31) de la source de gavage (3) préalablement à l'alimentation de l'appareil hydraulique menant (1), ledit accumulateur (32) se déchargeant pour alimenter l'admission (11) de l'appareil hydraulique menant (1) et réaliser sa mise en service.

## Patentansprüche

1. System, umfassend:
- ein führendes hydraulisches Gerät (1) mit einziehbaren radialen Kolben, aufweisend eine Einlassöffnung (11) und eine Druckausgangsöffnung (12),
- ein geführtes hydraulisches Gerät (2) mit einziehbaren radialen Kolben, aufweisend eine Einlassöffnung (21) und eine Druckausgangsöffnung (22), wobei der Druckausgang (12) des führenden hydraulischen Geräts (1) mit dem Einlass (21) des geführten hydraulischen Geräts (2) durch eine Versorgungsleitung (4) verbunden ist und der Druckausgang (22) des geführten hydraulischen Geräts (2) mit dem Einlass (11) des führenden hydraulischen Geräts (1) durch eine Rücklaufleitung (5) verbunden ist,
- einen primären Motor (M),
**dadurch gekennzeichnet, dass** das System ferner eine Versorgungsquelle (3) umfasst, die einen Durchsatz bereitstellt, der ausgebildet ist, um selektiv abgefordert zu werden, wobei die Versorgungsquelle verbunden ist mit
- der Einlassleitung (4) und der Druckausgangsleitung (5) über eine Versorgungsleitung, und
- selektiv entweder mit einem Reservoir (R) oder nur mit dem Einlass (11) des führenden hydraulischen Geräts (1) über eine Abforderungsleitung, die mit einer Steuerung (7) ausgestattet ist.

2. System nach Anspruch 1, wobei die Versorgungsquelle (3) eine Versorgungspumpe (31) umfasst, die mit dem primären Motor (M) durch eine Kupplung (33) verbunden ist, die ihre selektive Kopplung erlaubt, und einen hydraulischen Akkumulator (32), der ausgebildet ist, um von der Versorgungspumpe (31) versorgt zu werden und einen Druck zu liefern.

3. System nach Anspruch 1, wobei die Versorgungsquelle (3) den primären Motor (M) und eine Versorgungspumpe (31) umfasst, wobei der primäre Motor (M) und die Versorgungspumpe (31) eine Elektropumpengruppe bilden.

4. System nach einem der Ansprüche 1 bis 3, wobei die Steuerung (7) derart konfiguriert ist, dass eine Implementierung des führenden hydraulischen Geräts (1) über die Anwendung eines Durchsatzes durch die Versorgungsquelle (3) vor der Implementierung des geführten hydraulischen Geräts (2) durchgeführt wird, wobei das führende hydraulische Gerät (1) eine Pumpenfunktion für eine Funktionsrichtung des Systems aufweist.

5. System nach einem der Ansprüche 1 bis 4, wobei die Steuerung (7) umfasst:
- einen Abforderungsverteiler (7), der ausgebildet ist, um, in einer ersten Konfiguration (7A), den Einlass (11) des führenden hydraulischen Geräts (1) mit der Versorgungsquelle (3) und den Druckausgang (22) des geführten hydraulischen Geräts (2) mit einem Reservoir mit Umgebungsdruck (R) zu verbinden und in einer zweiten Konfiguration (7B) den Einlass (11) des führenden hydraulischen Geräts (1) mit dem Druckausgang (22) des geführten hydraulischen Geräts (2) zu verbinden.

6. System nach einem der Ansprüche 1 bis 5, wobei die Versorgungsleitung mit einem Versorgungsverteiler (6) ausgestattet ist, der ausgebildet ist, um, in einer ersten Konfiguration (6A), die Einlassleitung (4) und die Rücklaufleitung (5) mit einem Reservoir (R) mit Umgebungsdruck zu verbinden, jeweils über ein Anti-Rücklauf-Ventil (82, 84) und einen Druckbegrenzer (81, 83), und in einer zweiten Konfiguration (6B) die Versorgungsquelle (3) mit der Einlassleitung (4) und der Rücklaufleitung (5) zu verbinden, jeweils über ein Anti-Rücklauf-Ventil (82, 84) und einen Druckbegrenzer (81, 83).

7. Fahrzeug, umfassend ein System nach einem der Ansprüche 1 bis 6, wobei das Fahrzeug eine Hauptübertragung umfasst, die den Antrieb einer führenden Achse (13) durchführt, an die das führende hydraulische Gerät (1) gekoppelt ist, und eine geführte Achse (23), die von der Hauptübertragung nicht angetrieben wird und an die das geführte hydraulische Gerät (2) gekoppelt ist, wobei die Steuerung (7) derart konfiguriert ist, dass die Implementierung des führenden hydraulischen Geräts (1) vor der Implementierung des geführten hydraulischen Geräts (2) möglich ist.

8. Steuerungsverfahren eines hydraulischen Systems, umfassend ein führendes hydraulisches Gerät (1) mit einziehbaren radialen Kolben und ein geführtes hydraulisches Gerät (2) mit einziehbaren radialen Kolben, wobei die Implementierung der hydraulischen Geräte (1, 2) anhand der folgenden Schritte erfolgt:
- Koppeln einer Versorgungsquelle (3) an einen primären Motor (M), so dass die Versorgungsquelle (3) einen Druck bereitstellt,
- Verbinden der Versorgungsquelle (3) derart, dass sie den Einlass (11) des führenden hydraulischen Geräts (1) über eine Abforderungsleitung versorgt, wobei der Druckausgang (22) des geführten hydraulischen Geräts (2) dann mit einem Reservoir mit Umgebungsdruck (R) verbunden ist,
- Durchführen einer Verzögerung, während der die Versorgungsquelle (3) die Implementierung des führenden hydraulischen Geräts (1) durch Veranlassen des schrittweisen Ausfahrens seiner Kolben aus ihren jeweiligen Aufnahmen und ihr Inkontaktversetzen mit einem Nocken durchführt, wobei das führende hydraulische Gerät (1) Öl durch seinen Druckausgang (12) fördert, das das geführte hydraulische Gerät (2) über seinen Einlass (21) über eine Einlassleitung (4) versorgt und somit seine Implementierung durchführt, währenddessen der Druckausgang (22) des geführten Geräts (2) mit dem Reservoir mit Umgebungsdruck (R) verbunden ist,
- Verbinden des Druckausgangs (22) des geführten hydraulischen Geräts (2) mit dem Einlass (11) des führenden hydraulischen Geräts (1) durch eine Rücklaufleitung (5), so dass ein geschlossener Kreis zwischen den zwei hydraulischen Geräten (1, 2) gebildet wird.

9. Verfahren nach Anspruch 8, umfassend ferner einen Schritt, bei dem die Versorgungsquelle (3) mit der Einlassleitung (4) und der Rücklaufleitung (5) über eine Versorgungsleitung verbunden wird, umfassend einen Versorgungsverteiler (6), so dass eine Versorgung des derart gebildeten geschlossenen hydraulischen Kreises durchgeführt wird.

10. Verfahren nach Anspruch 9, umfassen ferner eine Löseschritt der hydraulischen Geräte (1, 2), bei dem:
- die Versorgungsquelle (3) gelöst wird,
- der Versorgungsverteiler (6) derart gesteuert wird, dass die Einlassleitung (4) und die Rücklaufleitung (5) mit dem Reservoir (R) mit Umgebungsdruck verbunden werden, in typischer Weise über ein Anti-Rücklauf-Ventil und einen Druckbegrenzer, und
- der Druckausgang (22) des geführten hydraulischen Geräts (2) mit dem Reservoir (R) mit Umgebungsdruck derart verbunden wird, dass das Fluid aus dem geschlossenen Kreis in das Reservoir (R) mit Umgebungsdruck abgelassen wird und damit das führende hydraulische Gerät (1) und das geführte hydraulische Gerät (2) in Freilaufkonfiguration versetzt werden.

11. Verfahren nach einem der Ansprüche 8 bis 10, umfassend ferner einen Ladeschritt eines Akkumulators (32) durch eine Versorgungspumpe (31) der Versorgungsquelle (3) vor der Versorgung des führenden hydraulischen Geräts (1), wobei sich der Akkumulator (32) entlädt, um den Einlass (11) des führenden hydraulischen Geräts (1) zu versorgen und seine Implementierung durchzuführen.

## Claims

1. A system comprising:
- a driving hydraulic device (1) with retractable radial pistons, having an admission port (11) and a discharging port (12),
- a driven hydraulic device (2) with retractable radial pistons, having an admission port (21) and a discharging port (22),
the discharging (12) of the driving hydraulic device (1) being connected to the admission (21) of the driven hydraulic device (2) by a supply line (4), and the discharging (22) of the driven hydraulic device (2) being connected to the admission (11) of the driving hydraulic device (1) by a return line (5),
- a primary motor (M),
**characterized in that** said system further comprises a booster source (3) delivering a flow, suitable for being selectively engaged, said booster source being connected
- to the admission line (4) and to the discharge line (5) via a booster line, and
- selectively either to a tank (R), or only to the admission (11) of the driving hydraulic device (1) via an engagement line equipped with a control (7).

2. The system according to claim 1, wherein the booster source (3) comprises a booster pump (31) connected to the primary motor (M) by a clutch (33) allowing their selective coupling, and a hydraulic accumulator (32) suitable for being charged by the booster pump (31) and delivering a pressure.

3. The system according to claim 1, wherein the booster source (3) comprises the primary motor (M) and a booster pump (31), the primary motor (M) and the booster pump (31) forming a motor-driven pump unit.

4. The system according to one of claims 1 to 3, wherein the control (7) is configured in such a way as to turn on the driving hydraulic device (1) via the application of a flow by the booster source (3) prior to turning on the driven hydraulic device (2), the driving hydraulic device (1) having one pump operation for one direction of operation of the system.

5. The system according to one of claims 1 to 4, wherein the control (7) comprises:
- an engagement distributor (7) suitable for connecting the admission (11) of the driving hydraulic device (1) to the booster source (3) and the discharging (22) of the driven hydraulic device (2) to a tank (R) at ambient pressure, in a first configuration (7A), and connecting the admission (11) of the driving hydraulic device (1) to the discharging (22) of the driven hydraulic device (2), in a second configuration (7B).

6. The system according to one of claims 1 to 5, wherein the booster line is equipped with a booster distributor (6) suitable for connecting the admission line (4) and the return line (5) to a tank (R) at ambient pressure each via a check valve (82, 84) and a pressure limiter (81, 83), in a first configuration (6A) and connecting the booster source (3) to the admission line (4) and to the return line (5) each via a check valve (82, 84) and a pressure limiter (81, 83) in a second configuration (6B).

7. A vehicle comprising a system according to one of claims 1 to 6, said vehicle comprising a main transmission driving a driving axle (13) to which the driving hydraulic device (1) is coupled, and a driven axle (23) not driven by the main transmission and to which the driven hydraulic device (2) is coupled, wherein the control (7) is configured in such a way as to make it possible to turn on the driving hydraulic device (1) prior to turning on the driven hydraulic device (2).

8. A method for controlling a hydraulic system comprising a driving hydraulic device (1) with retractable radial pistons and a driven hydraulic device (2) with retractable radial pistons, wherein the turning on of said hydraulic devices (1, 2) is achieved by the following steps:
- a booster source (3) is coupled to a primary motor (M), so that the booster source (3) delivers a pressure,
- the booster source (3) is connected so that it powers the admission (11) of the driving hydraulic device (1) via an engagement line, the discharging (22) of the driven hydraulic device (2) then being connected to a tank (R) at ambient pressure,
- a timeout is executed, during which the booster source (3) turns on the driving hydraulic device (1) by making the pistons gradually exit their respective housings and putting them in contact with a cam, the driving hydraulic device (1) discharging oil via its discharge (12) which powers the driven hydraulic device (2) by its admission (21) via an admission line (4) and thus turns it on while the discharging (22) of the driven device (2) is connected to the tank (R) at ambient pressure,
- the discharging (22) of the driven hydraulic device (2) is connected to the admission (11) of the driving hydraulic device (1) by a return line (5) in such a way as to form a closed circuit between the two hydraulic devices (1, 2).

9. The method according to claim 8, further comprising a step in which the booster source (3) is connected to the admission line (4) and to the return line (5) via a booster line comprising a booster distributor (6) in such a way as to perform a force feeding of the closed hydraulic circuit thus formed.

10. The method according to claim 9, further comprising a step of disengagement of the hydraulic devices (1, 2) wherein:
- the booster source (3) is disengaged,
- the booster distributor (6) is controlled in such a way as to connect the admission line (4) and the return line (5) to the tank (R) at ambient pressure, typically via a check valve and a pressure limiter, and
- the discharging (22) of the driven hydraulic device (2) is connected to the tank (R) at ambient pressure in such a way as to drain the fluid of the closed circuit into the tank (R) at ambient pressure and thus put the driving (1) and driven (2) hydraulic devices in freewheel configuration.

11. The method according to one of claims 8 to 10, further comprising a step of charging an accumulator (32) by a booster pump (31) of the booster source (3) prior to powering the driving hydraulic device (1), said accumulator (32) discharging to power the admission (11) of the driving hydraulic device (1) and turn it on.
